# EUROPEAN PATENT SPECIFICATION

(11) **EP 1 623 868 B1**
(45) Date of publication and mention of the grant of the patent: **23.04.2008**
(21) Application number: 05076769.8
(22) Date of filing: 29.07.2005
(51) Int. Cl.: B60N 2/28

(54) **A child vehicle seat as well as a chassis suitable for such a child vehicle seat**
Fahrzeugkindersitz und Träger für einen solchen Sitz
Siège d'enfants pour véhicule et chassis pour un tel siège

(30) Priority: 02.08.2004 NL 1026766
(43) Date of publication of application: 08.02.2006
(73) Proprietor: Maxi Miliaan B.V., 5704 RD Helmond (NL)
(72) Inventor: Fransen, Martinus Theodorus, 5663 EN Geldrop (NL); Van Niekerk, Koen Jozef, 5615 AJ Eindhoven (NL)
(74) Representative: Veldman-Dijkers, Cornelia G. C.

(56) References cited:
- EP-A- 1 078 809
- WO-A-20/04033251

## Description

The invention relates to an child vehicle seat suitable for use in a vehicle, which child vehicle seat comprises a chassis and a seat connected to said chassis, which chassis is provided with belt guide means for guiding a belt fitted in the vehicle for fixing the child vehicle seat in position in the vehicle, as well as belt tensioning means for moving the belt from an initial position to a tensioning position, in which the belt is tensioned relative to the initial position.

The invention also relates to a chassis suitable for such an child vehicle seat.

With such an child vehicle seat, which is known from International patent application WO-A1-2004/033251, the chassis is provided with a cam that pivots about a substantially vertical axis. The cam is located on a front side of the chassis remote from a back support of the vehicle seat. The cam can pivot from an initial position, in which the cam is positioned in a recess in the chassis, to a tensioning position, in which a belt contact surface present on the cam has been moved in a direction away from the back support. The belt positioned against the cam is likewise moved in a direction away from the back support, causing it to be tensioned. During said tensioning, the chassis is pressed towards the back support under friction with the seat portion. To obtain a correct fixation of the chassis on the vehicle seat, the surface area of the chassis that is pressed against the back support must be relatively large. If said surface area is too small, the chassis will be pressed into the back support relatively easily, and hardly any tensioning of the belt will take place. The relatively large surface area on the side facing towards the back support that is required has a limiting effect on the freedom of design of the chassis.

The object of the invention is to provide an child vehicle seat in which the child vehicle seat can be installed in a vehicle in a simple manner.

This object is accomplished with the child vehicle seat according to the invention in that at least part of the belt can be moved in a substantially vertical direction, away from the chassis, from the initial position by the belt tensioning means.

By moving part of the belt in a substantially vertical direction, away from the chassis, a substantially vertical force extending in the direction of the seat portion of the vehicle seat is exerted on the chassis, as a result of which the chassis is pressed in the direction of said seat portion partially under the influence of the force of gravity. No friction force needs to be overcome between the child vehicle seat and the vehicle seat in that case. Because the chassis must support at least the seat that is present thereon, at least the side of the chassis that faces towards the seat portion is relatively large, as a result of which it is ensured that the chassis will be held down on the seat portion in a good, stable manner. At the same time, the side of the chassis that faces towards the back support of the vehicle seat may have practically any desired shape, so that a relatively high degree of freedom of design is obtained at that location.

When part of the belt is moved in a substantially vertical direction, a force towards the back support will be exerted on the child vehicle seat simultaneously therewith, which furthermore ensures that the chassis will be also pressed sufficiently firmly against the back support.

One embodiment of the child vehicle seat according to the invention is characterized in that the belt tensioning means comprise at least one cam capable of pivoting movement about a substantially horizontal pivot axis, which cam is provided with a belt contact surface.

When such a cam capable of pivoting movement about a substantially horizontal axis is used, a part of the belt that abuts against the belt contact surface can be moved in vertical direction in a simple manner by pivoting the cam about said horizontal axis.

Another embodiment of the child vehicle seat according to the invention is characterized in that the belt tensioning means comprise at least two cams positioned on opposed longitudinal sides of the chassis.

The cams positioned on both longitudinal sides of the chassis move the belt in vertical direction away from the chassis on either side of the chassis, as a result of which the chassis is pressed against the seat portion of the child vehicle seat in a relatively stable manner. In addition, such cams are readily accessible to a user.

Yet another embodiment of the child vehicle seat according to the invention is characterized in that the pivot axes of the cams are co-axial.

In this way it can be ensured that the chassis will be pressed down on the vehicle seat in a symmetrical manner.

Yet another embodiment of the child vehicle seat according to the invention is characterized in that the cams can be jointly pivoted.

This makes it easy to operate the cams, as pivoting of one cam causes the other cam to be pivoted simultaneously.

Another embodiment of the child vehicle seat according to the invention is characterized in that the cam is provided with a handle on a side remote from the seat, which handle extends from the pivot axis to a position beyond the belt contact surface.

The cam can readily be pivoted about the pivot axis by means of the handle. Moreover, the belt may extend between the seat and the handle, with the belt being prevented from undesirably moving off the cam in a simple manner.

Yet another embodiment of the child vehicle seat according to the invention is characterized in that the cam can be pivoted from the initial position, in which the belt contact surface is located on a first side of a vertical extending through the pivot axis, to the tensioning position, in which the belt contact surface is located on a second side of the vertical remote from said first side.

By moving the contact surface from one side of the vertical to the other, the contact surface is moved beyond a so-called "dead centre", as a result of which the cam will remain in the tensioning position of its own accord and undesirable pivoting of the cam from the tensioning position back to the initial position is prevented in a simple manner.

Yet another embodiment of the child vehicle seat according to the invention is characterized in that the belt tensioning means are positioned in a recess formed in the chassis, over which recess the belt extends in the initial position.

In this way the belt tensioning means do not form any parts that project from the chassis, which parts might interfere with arranging the belt about the chassis. In addition, the belt tensioning means positioned in the recess give the chassis a taut appearance.

Yet another embodiment of the child vehicle seat according to the invention is characterized in that the chassis can be positioned on a vehicle seat, with a rear side of the chassis abutting against a back support of the vehicle seat, whilst the cam can be pivoted about a pivot axis that extends substantially parallel to said rear side, from an initial position, in which the belt contact surface faces away from the back support, to a tensioning position, in which the belt contact surface is pivoted towards the back support.

Pivoting the cam towards the back support for fixing the chassis is an operation that is relatively logical to a user.

Another embodiment of the child vehicle seat according to the invention is characterized in that the belt guide means comprise a substantially vertical surface which, in use, extends substantially parallel to a back support of a vehicle seat.

Such a surface forms a simple and adequate guide for the belt.

The invention also relates to a chassis suitable for an child vehicle seat, which chassis can first be separately mounted in a vehicle, after which a seat can be detachably connected to the chassis.

The space required for installing the seat extends mainly in a plane parallel to the seat portion of a vehicle seat. As a result, the surface area of the chassis parallel to the seat portion is relatively large. When the belt is being tensioned by belt tensioning means, the chassis is firmly and stably pressed against the seat portion in vertical direction. The dimensions of the chassis in a direction towards the back support are not essential either for fitting the seats to the chassis or for fixing the chassis to the vehicle seat. Consequently, a designer will have a relatively high degree of freedom in designing the chassis and selecting its dimensions.

The invention will now be explained in more detail with reference to the drawings, in which:
Figure 1 is a perspective view of an child vehicle seat according to the invention;
Figure 2 shows the child vehicle seat of figure 1, with the belt and the belt tensioning means in the initial position;
Figure 3 is a side view of the child vehicle seat that is shown in figure 2;
Figure 4 shows the child vehicle seat of figure 1, with the belt and the tensioning means in the tensioning position;
Figure 5 is a side view of the child vehicle seat that is shown in figure 4;
Figures 6-8 are side views of a second embodiment of an child vehicle seat according to the invention in an initial position, an intermediate position and a tensioning position, respectively;
Figures 9-12 are side views of a detail of a third embodiment of an child vehicle seat according to the invention in an initial position, an intermediate position and a tensioning position, respectively;
Figures 13a-18b are side views and perspective views of details of a fourth embodiment of an child vehicle seat according to the invention, showing the child vehicle seat in various positions thereof.

Like parts are indicated by the same numerals in the figures.

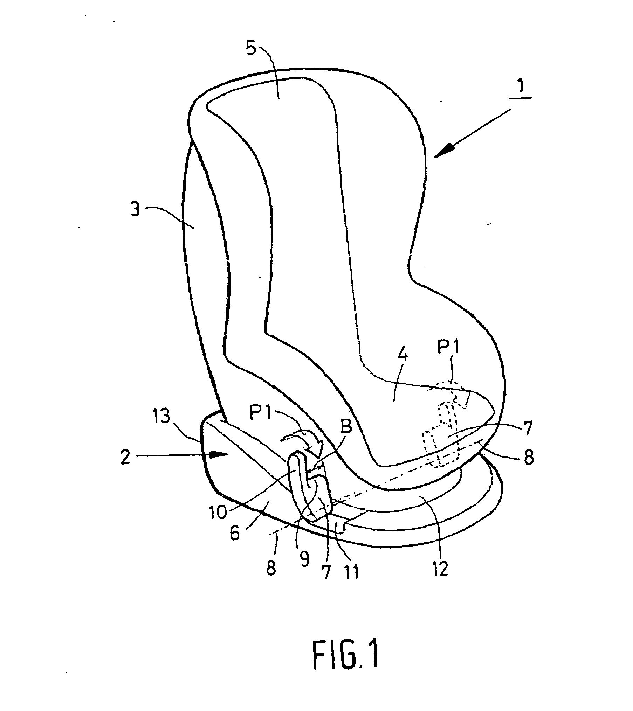

Figure 1 is a perspective view of an child vehicle seat according to the invention, which comprises a chassis 2 and a seat 3 that is tiltably connected to the chassis 2. The seat 3 may be detachably of fixedly connected to the chassis 2. The seat 3 comprises a seat portion 4 and a back support 5 connected thereto. The child vehicle seat 3 is provided with belts (not shown) for securing an child in the child seat 3. The child vehicle seat 1 as described so far is known per se and will not be explained in more detail therein, therefore.

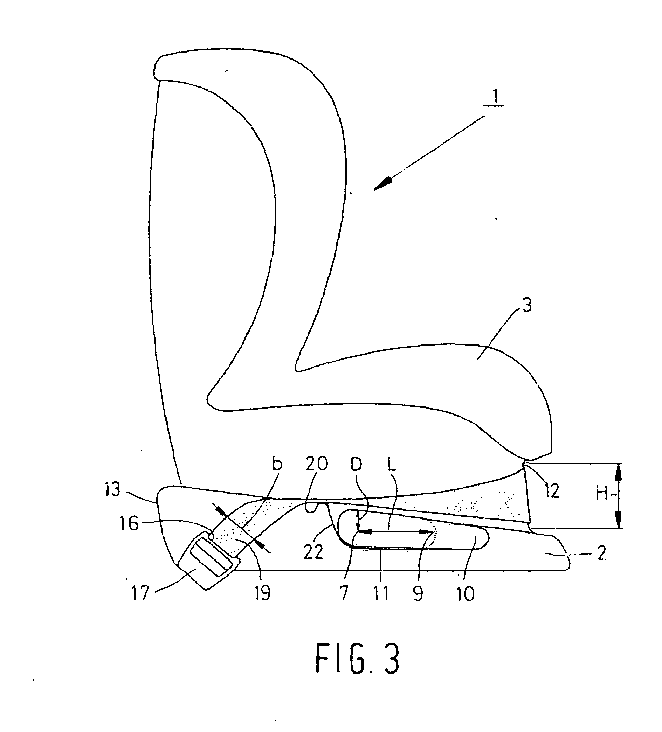

The child vehicle seat 1 according to the invention comprises two cams 7 positioned on either longitudinal side 6 of the chassis 2, which are each capable of pivoting movement in the direction indicated by the arrow P1 and in the opposite direction about a horizontal pivot axis 8. Each cam 7 is provided with a belt contact surface 9 at an end remote from the pivot axis. The distance L from the pivot axis 8 to the contact surface 9 is (preferably a few times) larger than the distance D from the pivot axis 8 to a side of the cam 7 (see figure 3). Each cam 7 is furthermore provided with a handle 10 on a side remote from the seat 3, which handle extends from the pivot axis 8 to a position beyond the contact surface 9. The chassis 2 is provided with a recess 11 on either longitudinal side, in which the cam 7 can be positioned upon pivoting of the cam 7 in the direction indicated by the arrow P1 (see figure 3). The chassis 2 has a surface 12 at a front side between the cams 7, which surface extends substantially vertically, parallel to a rear side 13 of the chassis 2. The width B of the contact surface 9 in a direction parallel to the pivot axes 8 as well as the height H in vertical direction of the surface 12 is at least equal to the width b of a belt by means of which the chassis 2 is fixed in a vehicle. Such vehicle-mounted belts have a substantially uniform width b of about 50 mm.

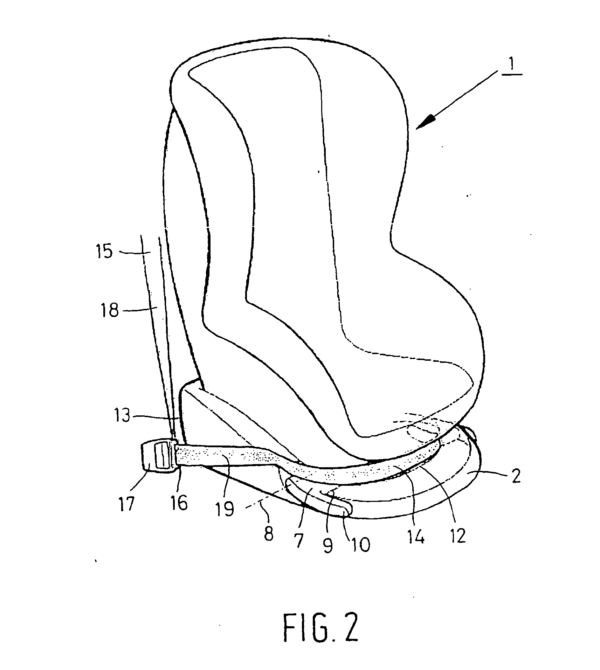

The operation of the child vehicle seat 1 that is shown in figure 1 will now be explained in more detail with reference to figures 2-4.

To install the child vehicle seat 1 in a vehicle, the chassis 2 of the child vehicle seat 1 is placed on a seat portion of a vehicle seat, and the rear side 13 of the chassis 2 is pressed against a back support of the vehicle seat. A vehicle seat is usually provided with a so-called three-point belt 14, one end of which is connected to the vehicle between the seat portion and the back support and the other end 15 of which is connected to the vehicle on a side of the back support remote from the seat portion. A belt buckle 16 can slide over the belt 14. The belt buckle 16 can be interlocked, via a buckle tongue, with a buckle lock 17, which is connected to the vehicle between the back support and the seat portion. The belt portion that extends between the belt buckle 16 and the end 15 is usually referred to as the shoulder belt 18, whilst the other belt portion is referred to as the lap belt 19.

To arrange the lap belt 19 about the chassis 2, the cams 7 are pivoted to the initial position in the recesses 11 that is shown in figures 2, 3.

After the chassis 2 has been placed on the seat portion of the vehicle seat, the lap belt 19 is passed over the surface 12, with the shoulder belt 18 extending at the rear side of the child vehicle seat 1.

Then the belt buckle 16 is inserted into the buckle lock 17 and the belt 14 is manually tightened. Usually, the end 15 of the belt 18 is connected to an automatic belt retractor, so that the belt 14 will be automatically tightened to a certain degree. If desired, the shoulder belt 18 can be locked against movement with respect to the child seat 1 by means that are known per se.

As is apparent from figure 3, the lap belt 19 abuts against the surface 12 at the front side of the chassis 2, as well as against two surfaces 20 present on either longitudinal side 6 of the chassis 2, which surfaces 20 are located on a side of the recess 11 that faces towards the rear side 13.

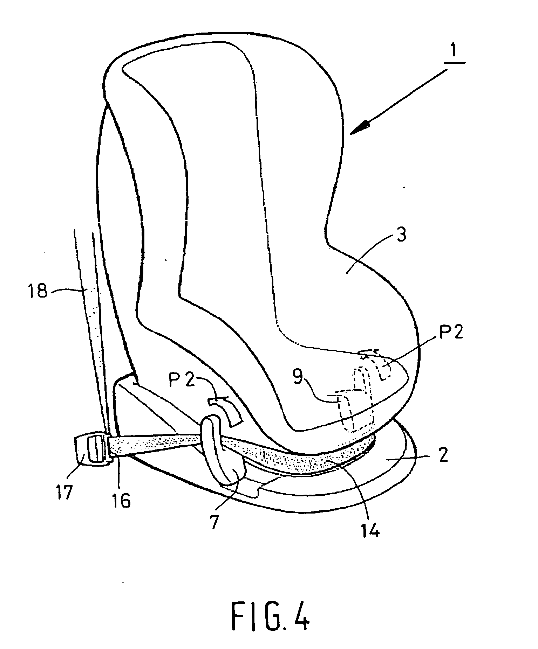

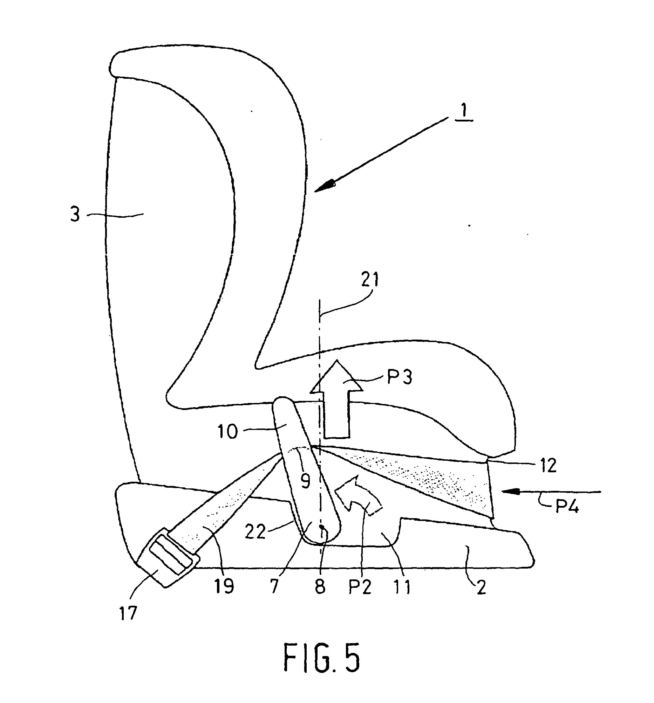

Once the belt buckle 16 is interlocked with the buckle lock 17 and the belt 14 has been tightened in a usual manner, a user will pivot the handles 10 of the cams 7 in the directions indicated by the arrows P2 (figures 4, 5). As a result, the contact surface 9 of the cam 7 will come into contact with the lap belt 19, causing the lap belt 19 to abut against the contact surface 9. Said pivoting of the cam 7 in the direction indicated by the arrow P2 causes the lap belt 19 to be moved vertically upwards, in the direction indicated by the arrow P3, relative to the chassis 2. The chassis 2 is thereby pressed down on the seat of the vehicle seat in the opposite direction of the arrow P3. The cam 7 is pivoted in the direction indicated by the arrow P2 until the contact surface 9 has been moved from the initial position in the recess 11 to the tensioning position that is shown in figure 5, in which the contact surface 9 is located on another side of the vertical 21 than in the initial position. The cam 7 abuts against a wall 22 of the recess 11 with one side in the tensioning position, so that the cam 7 is prevented from pivoting any further in a simple manner. The cam 7 is pressed firmly against the wall 22 of the recess 11 by the force that the belt 19 exerts on the contact surface 9 and thus on the chassis 2.

The advantage of moving the cam 7 beyond the so-called dead centre, i.e. the point at which the contact surface 9 is located substantially vertically above the pivot axis 8, is that no further additional measures are needed for keeping the cam 7 in the tensioning position.

When the lap belt 19 is moved in the direction indicated by the arrow P3, a pulling force will be exerted on the lap belt 19 as well, as a result of which the lap belt 19 will exert a force in the direction indicated by the arrow P4 on the contact surface 12, causing the chassis 2 to be pressed against the back support of the vehicle seat.

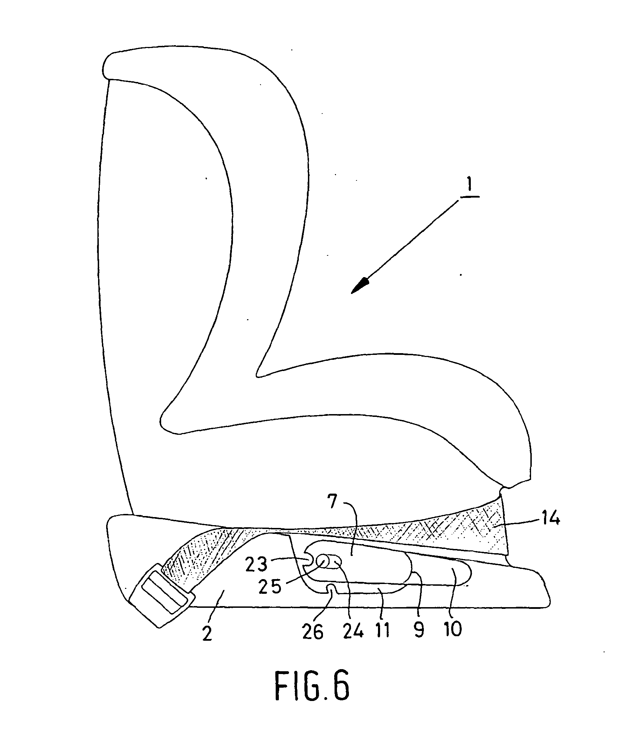

Figures 6-8 are side views of another embodiment of an child vehicle seat 1 according to the invention. The child vehicle seat 1 is different from the embodiment that is shown in figures 1-5 in that the cam 7 is provided with a recess 23 on a side remote from the belt contact surface 9. An elongated slot 24 is formed in the cam 7 between the recess 23 and the belt contact surface 9, which slot accommodates a pin 25 that is fixedly connected to the chassis 2. The cam 7 is capable of pivoting movement about the pin 25 and also of sliding movement with respect to the pin 25.

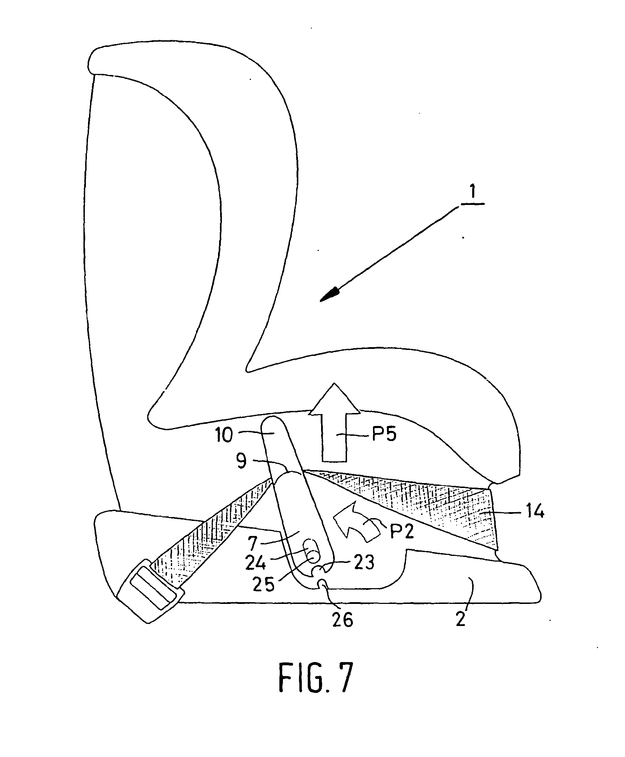

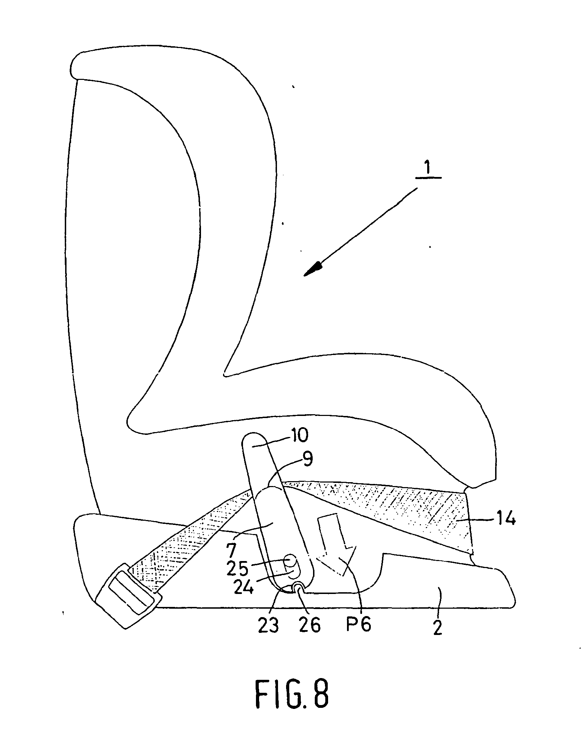

The chassis 2 is provided with a projection 26 at the location of the recess 11 in the chassis, the shape of which projection corresponds to that of the recess 23 in the cam 7. To tension the belt 14 from the initial position that is shown in figure 6, the cam 7 is pivoted in the direction indicated by the arrow P2 and simultaneously moved in the direction indicated by the arrow P5, away from the chassis 2 (see figure 7). Once the cam 7 has been pivoted to the tensioning position that is shown in figure 8, the cam 7 is moved in a direction indicated by the arrow P6 towards the chassis 2, causing the recess 23 of the cam 7 to be positioned over the projection 26 of the chassis 2. As a result, the cam 7 provided with the slot 24 moves with respect to the pin 25. In the position that is shown in figure 8, the recess 23 that is positioned over the projection 26 helps to prevent the cam 7 from pivoting back to the initial position in a simple manner.

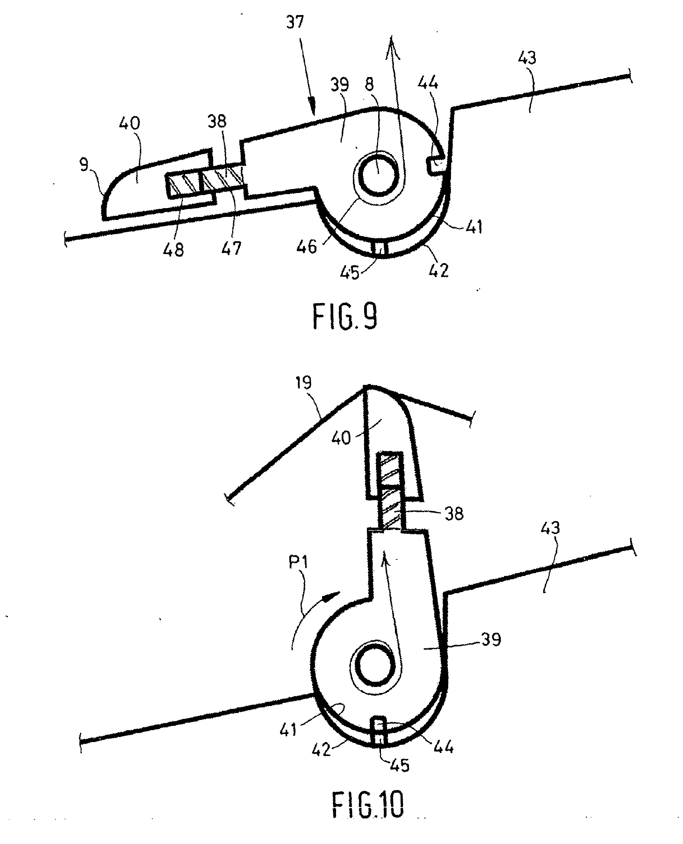

Figures 9-12 are side views of a detail of another embodiment of an child seat 1 according to the invention.

The child seat 1 is different from the embodiments that are shown in figures 1-5 and figures 6-8 in that the cam 37 is provided with two parts 39, 40 interconnected by a compression spring 38. The first part 39 comprises a cylindrical portion 41, whose shape corresponds to that of a recess 42 in the chassis 43 of the child vehicle seat. The central axis of the cylindrical portion 41 coincides with the pivot axis 8. The cylindrical portion 41 is provided with a recess 44. A projection 45 is present in the recess 42 of the chassis 43, which projection is adapted to mate with the recess 44. The first part 39, and consequently the cam 37, is held in the initial position that is shown in figure 9 by means of a torsion spring 46. The first part 39 is provided with a projection 47 on a side remote from the recess 44, which projection is positioned in an opening 48 in the second part 40. Positioned between the projection 47 and the openings 48 is the spring 38. The second part 40 is provided with a contact surface 9 on a side remote from the first part 39.

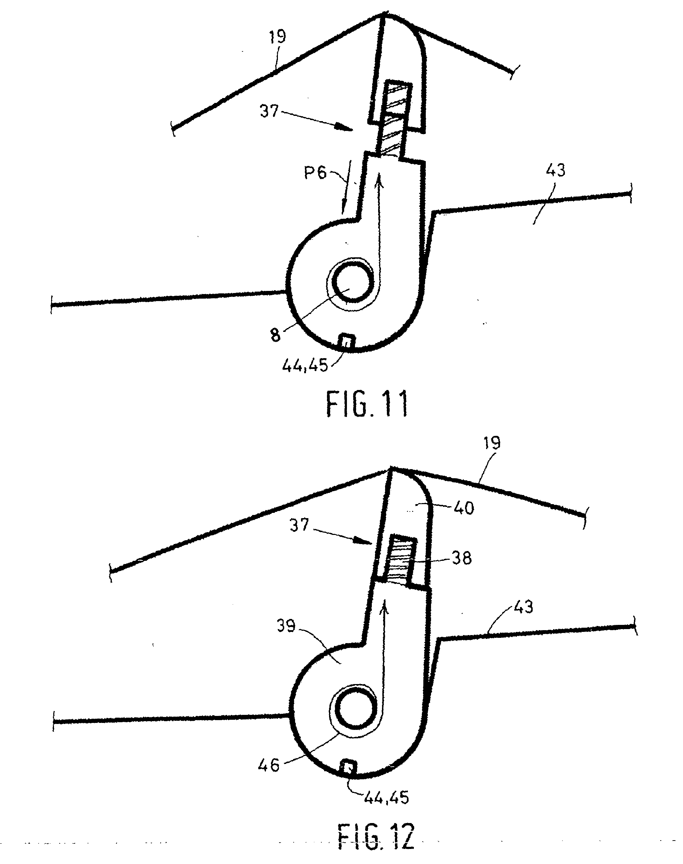

The operation of the cam 37 is as follows. After the chassis 1 has been connected to the vehicle in the above-described manner, with the lap belt 19 abutting against the parts 40, 39, the cam 37 is pivoted in the direction indicated by the arrow P1 against the spring force of the torsion spring 46 until the recess 44 in the first part 39 is positioned opposite the projection 45 in the chassis 43 (figure 10). Following that, the cam 37 is urged in the direction indicated by the arrow P6 under the influence of the force being exerted on the cam 37 by the lap belt 19, causing the recess 44 to be positioned over the projection 45 and the cam 37 to be locked against rotation about the pivot axis 8 (figure 11).

When forces are exerted on the chassis, the cam 37 and the lap belt 19, for example while driving on an uneven road surface, the second part 40 can move towards the first part 39 against the spring force of the spring 38 in order to ensure that the recess 44 will remain positioned over the projection 45. In this way it is ensured that the cam 37 cannot be pivoted in the opposite direction of the arrow P1 under the influence of the torsion spring 46. The spring force of the spring 38 is preferably greater than the spring force of the torsion spring 46.

To return the cam 37 to the basic position that is shown in figure 9, the lap belt 19 must be removed from the chassis 43. Then a user will first move the cam 37 in the opposite direction of the arrow P6, after which the cam 37 is pivoted in the opposite direction of the arrow P1 to the basic position that is shown in figure 9.

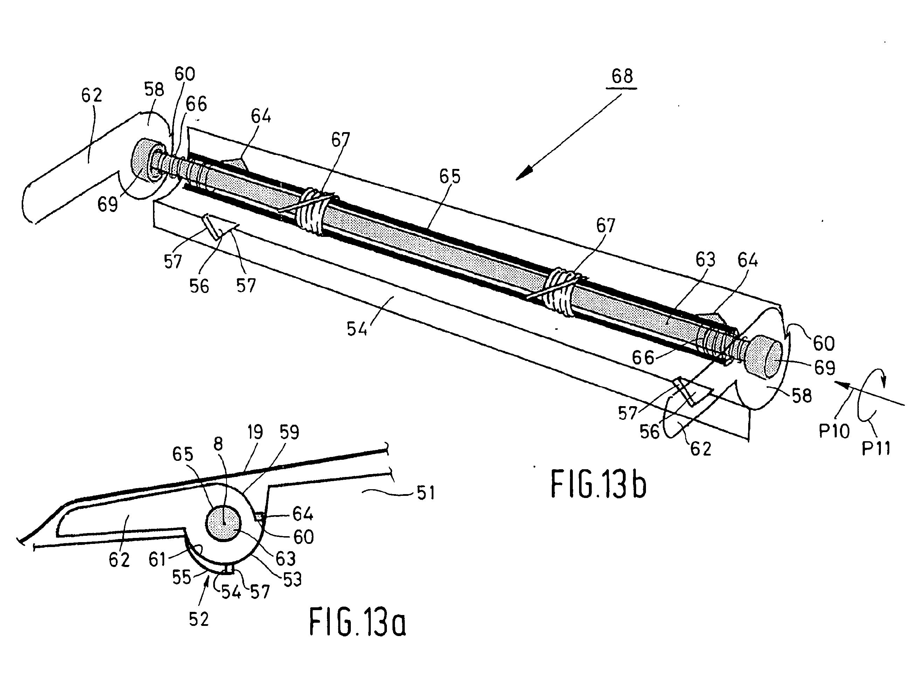

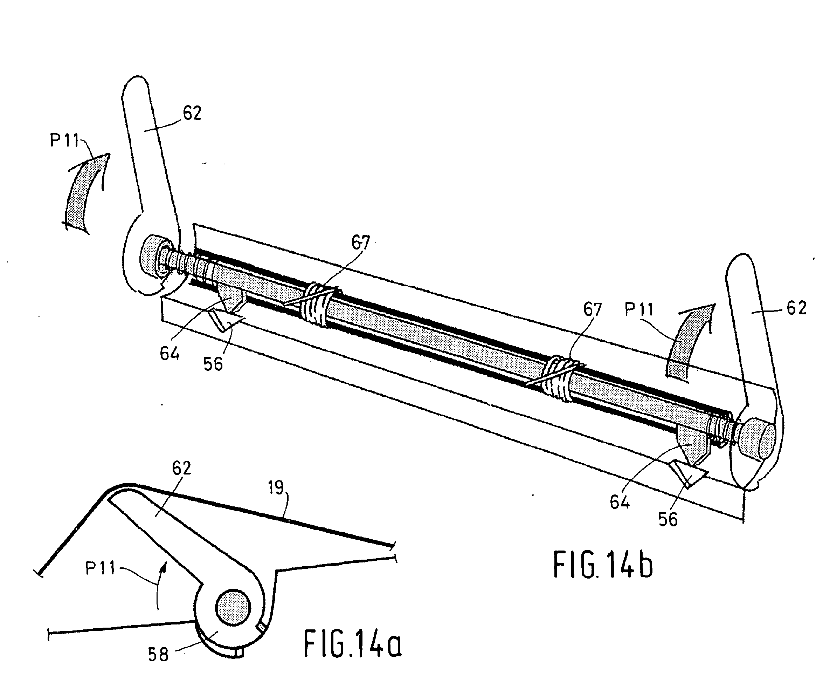

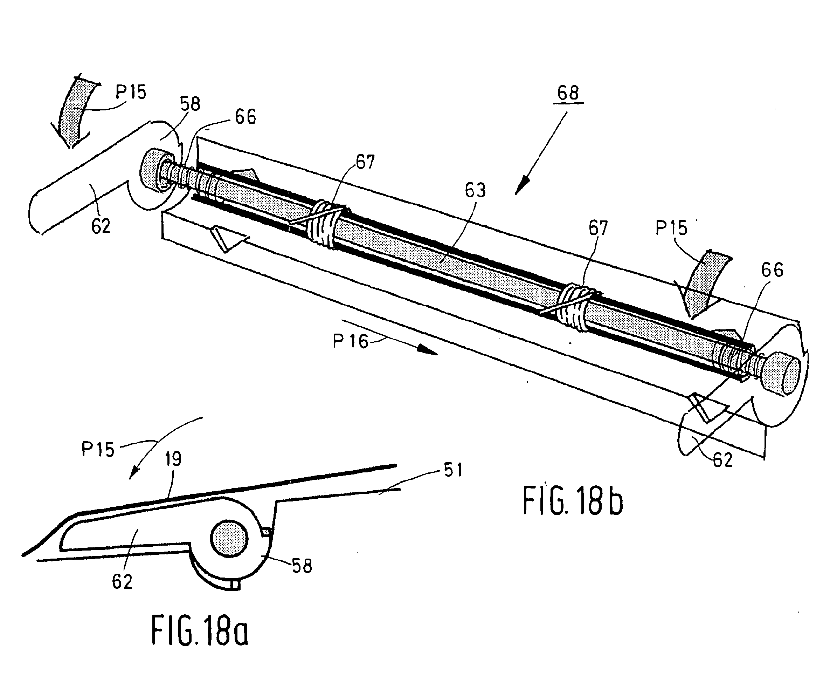

Figures 13a-18b are side views and perspective views of a fourth embodiment of an child vehicle seat according to the invention. The chassis 51 is provided with a recess 52, which comprises a first quadrant-shaped wall 53, a wall 54 extending transversely thereto, and a second quadrant-shaped wall 55 joining said wall 54. The recess 52 extends across the entire width of the chassis 51. Two triangular notches 56 are formed in the wall 54, which each comprise two walls 57 extending at an angle to each other. The child vehicle seat 1 further comprises two cams 58, one on either side, which are each provided with a first quadrant-shaped wall 59, a wall 60 extending transversely thereto, and a second quadrant-shaped wall 61 joining said wall 60. Each cam is provided with a handle 62 on a side remote from the wall 60. A rod 63 interconnects the cams 58 that are present on either side of the chassis 51. The rod 63 comprises two triangular projections 64, which have a shape corresponding to that of the triangular notches 56 and which are spaced the same distance apart as the triangular notches 56. The rod 63 is positioned within a tube 65. Two compression springs 66 are mounted between the rod 63 and the tube 65, against the spring force of which springs 66 the rods 63 are movable in the direction indicated by the arrow P10 and in the opposite direction. Furthermore, two torsion springs 67 are mounted between the rod 63 and the tube 65, said rod 63 being pivotable in directions opposite the direction indicated by the arrow P11 against the spring force of the torsion springs 67.

The operation of the belt tensioning mechanism 68 that is shown in figures 13a-18b is as follows.

The chassis 51 is fixed to the vehicle by means of a lap belt 19, among other things, in the same manner as described above. At this stage the belt tensioning mechanism 68 is in the initial position that is shown in figures 13a-13b.

Then a user takes hold of a handle 62 and pivots it in the direction indicated by the arrow P11. As a result, the cams 58 as well as the rod 63 connected to the cams 58 are likewise pivoted in the direction indicated by the arrow P11. The triangular projections 64 are thereby moved towards the triangular notches 56. To that end slots are present in the tube 65, through which the triangular projections 64 move. Said movement in the direction indicated by the arrow P11 takes place against the spring force of the torsion springs 67.

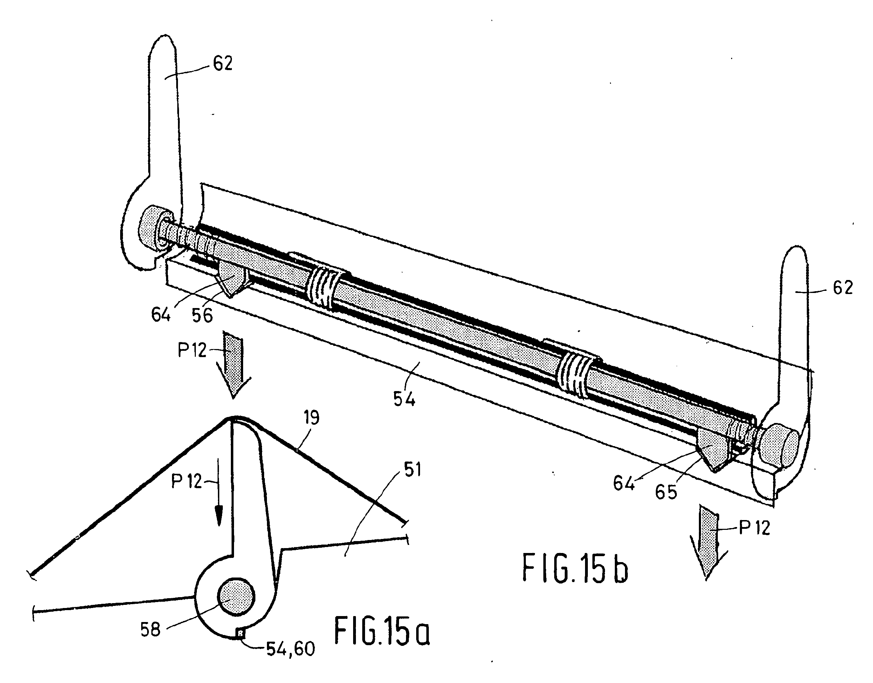

The handle 62 is pivoted in the direction indicated by the arrow P11 until the triangular projections 64 are positioned opposite the notches 56 and are moved in the direction indicated by the arrow P12 by the force that the lap belt 19 exerts on the handle under the influence of the torsion springs 6 and 7, until the triangular projections 64 are positioned in the triangular notches 56. The wall 60 of the cam 58 is thereby positioned opposite the wall 54 of the chassis 51 (see figures 15a-15b). The lap belt 19 is now firmly tightened. The cams 58 are effectively locked against movement towards the initial position that is shown in figures 13a-13b as a result of the abutment of the wall 60 against the wall 54 and the presence of the projections 64 in the notches 56.

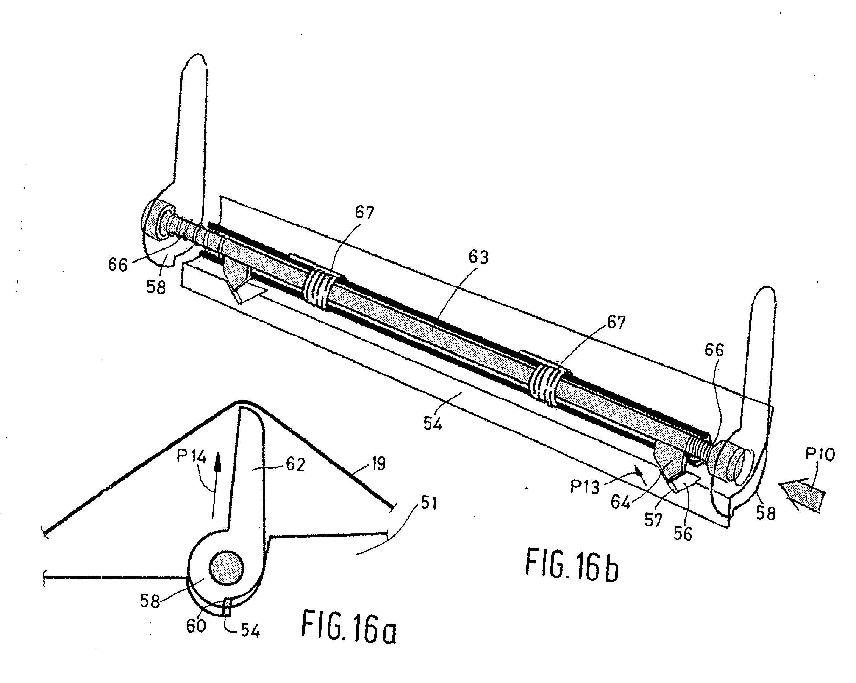

To unlock the cams 58, a user will press one of the buttons 69 present on the ends of the rod 63, causing the rod 63 to be moved in the direction indicated by the arrow P10 or in the opposite direction. During said movement, the projections 64 slide over the sloping walls 57 of the triangular notches 56, as it were, in the direction indicated by the arrow P13. As a result, the cams 58 that are connected to the rod 63 are moved in the direction indicated by the arrow P14, opposite the direction indicated by the arrow P12, causing the wall 60 of the cam 58 to be positioned above the wall 54 of the chassis 51 (see figures 16a-17b).

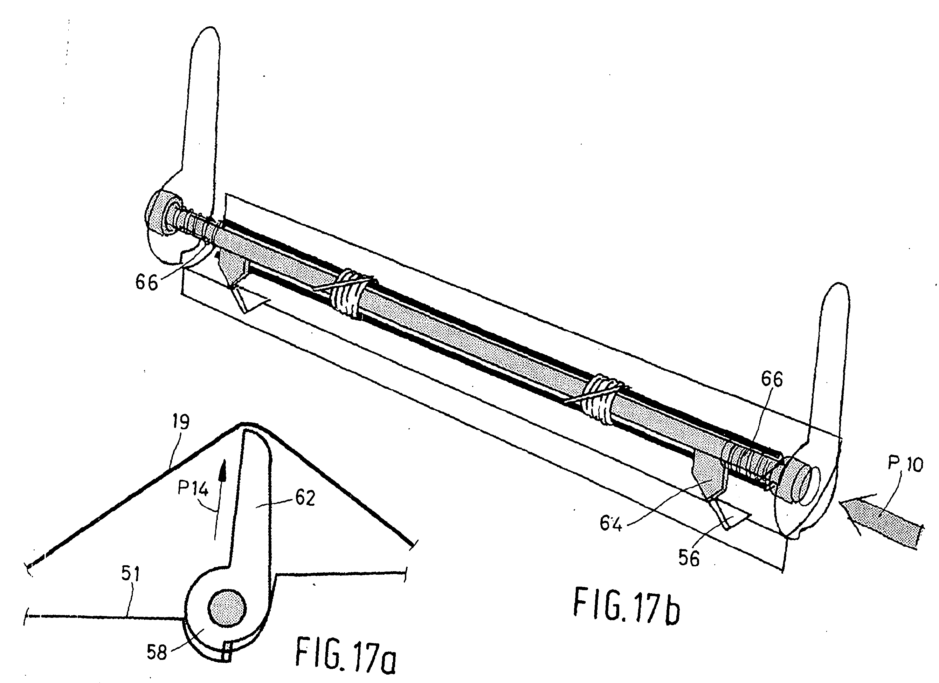

Once the cams 58 and the projections 64 have reached the position that is shown in figures 17a-17b, the rod 63 will be pivoted in the direction indicated by the arrow P15, opposite the direction indicated by the arrow P11, under the influence of the torsion springs 67. Following that, the rod 63 will be moved in the direction indicated by the arrow P16 again, opposite the direction indicated by the arrow P10, under the influence of the compression springs 66. At that stage the belt tensioning mechanism 68 will be in the initial position that is shown in figures 13a-13b again.

Preferably, the two cams 7 present on either side of the chassis 2 are interconnected, so that one cam 7 being pivoted will automatically result in the other cam 7 being pivoted as well. The advantage of this is that a user only needs to pivot one cam. Another advantage of using two cams is that a lap belt 19 will be tensioned more firmly than in the situation in which a single cam of the same dimensions is used.

Since the lap belt 19 is positioned between the seat 3 and the handle 10, the lap belt 19 cannot undesirably move off the contact surface 9.

Instead of using pivotable cams 7 for tensioning the belt, it is also possible to use blocks that can be translated in vertical direction, which blocks can be locked in the tensioning position.

According to another possibility, the two pivot axes 8 extend at an angle to each other in a horizontal plane, which angle is adapted to conform to the natural course of the lap belt 19 at the location of the pivot axes 8.

It is also possible to provide inflatable elements, in which case the belt will be movable in vertical direction.

It is also possible to lock the belt tensioner in the tensioning position by means of a ratchet mechanism, for example, in which case the belt tensioner will furthermore be provided with unlocking means. It is also possible to use a random eccentric element instead of a cam.

The chassis may also form part of the seat. The chassis may be an L-shaped element, with the back support as well as the seat portion of the seat abutting against the chassis. According to another possibility, the chassis only supports the seat portion.

## Claims

1. An child vehicle seat suitable for use in a vehicle, which child vehicle seat (1) comprises a chassis (2) and a seat (3) connected to said chassis, which chassis is provided with belt guide means for guiding a belt fitted in the vehicle for fixing the child vehicle seat in position in the vehicle, as well as belt tensioning means (7) for moving the belt from an initial position to a tensioning position, in which the belt is tensioned relative to the initial position, **characterized in that** at least part of the belt can be moved in a substantially vertical direction, away from the chassis, from the initial position by the belt tensioning means.

2. An child vehicle seat according to claim 1, **characterized in that** the belt tensioning means comprise at least one cam (7) capable of pivoting movement about a substantially horizontal pivot axis (8), which cam is provided with a belt contact surface (9).

3. An child vehicle seat according to claim 2, **characterized in that** the belt tensioning means comprise at least two cams (7) positioned on opposed longitudinal sides of the chassis (2).

4. An child vehicle seat according to claim 3, **characterized in that** the pivot axes (8) of the cams are co-axial.

5. An child vehicle seat according to claim 3 or 4, **characterized in that** the cams (7) can be jointly pivoted.

6. An child vehicle seat according to any one of the preceding claims 2-5, **characterized in that** the cam (7) is provided with a handle (10) on a side remote from the seat, which handle extends from the pivot axis to a position beyond the belt contact surface.

7. An child vehicle seat according to any one of the preceding claims 2-6, **characterized in that** the cam (7) can be pivoted from the initial position, in which the belt contact surface (9) is located on a first side of a vertical extending through the pivot axis (8), to the tensioning position, in which the belt contact surface is located on a second side of the vertical remote from said first side.

8. An child vehicle seat according to any one of the preceding claims, **characterized in that** the belt tensioning means are positioned in a recess formed in the chassis (2), over which recess the belt extends in the initial position.

9. An child vehicle seat according to any one of the preceding claims, **characterized in that** the chassis can be positioned on a vehicle seat, with a rear side of the chassis abutting against a back support of the vehicle seat, whilst the cam can be pivoted about a pivot axis that extends substantially parallel to said rear side, from an initial position, in which the belt contact surface faces away from the back support, to a tensioning position, in which the belt contact surface is pivoted towards the back support.

10. An child vehicle seat according to any one of the preceding claims, **characterized in that** the belt guide means comprise a substantially vertical surface which, in use, extends substantially parallel to a back support of a vehicle seat.

11. An child vehicle seat according to any one of the preceding claims, **characterized in that** the chassis and the belt tensioning means are provided with locking means for locking the belt tensioning means in the tensioning position relative to the chassis.

12. An child vehicle seat according to claim 11, **characterized in that** the belt tensioning means are provided with a recess which can be positioned over a projection that is connected to the chassis, or vice versa, in the tensioning position.

13. A chassis (2) suitable for an child vehicle seat according to any one of the preceding claims, which chassis (2) is provided with belt guide means for guiding a belt fitted in the vehicle for fixing the child vehicle seat in position in the vehicle, as well as belt tensioning means (7) for moving the belt from an initial position to a tensioning position, in which the belt is tensioned relative to the initial position, **characterized in that** at least part of the belt can be moved in a substantially vertical direction, away from the chassis, from the initial position by the belt tensioning means (7).

## Patentansprüche

1. Fahrzeugkindersitz für die Verwendung in einem Fahrzeug, wobei der Fahrzeugkindersitz (1) einen Träger (2) und einen mit dem Träger verbundenen Sitz (3) umfasst, wobei der Träger mit Gurtführungsmitteln zum Führen eines im Fahrzeug angebrachten Gurts für das Fixieren des Fahrzeugkindersitzes in seiner Lage im Fahrzeug, sowie Gurtstraffungsmitteln (7), um den Gurt aus einer Anfangslage in eine Spannlage zu bewegen, in welcher der Gurt im Vergleich zur Anfangslage gespannt ist, versehen ist, **dadurch gekennzeichnet, dass** zumindest ein Teil des Gurts durch die Gurtstraffungsmittel aus der Anfangslage in einer im Wesentlichen vertikalen Richtung vom Träger weg bewegt werden kann.

2. Fahrzeugkindersitz nach Anspruch 1, **dadurch gekennzeichnet, dass** die Gurtstraffungsmittel zumindest einen Nocken (7) umfassen, der eine Schwenkbewegung um eine im Wesentlichen horizontale Schwenkachse (8) ausführen kann, wobei der Nocken mit einer Gurtkontaktfläche (9) versehen ist.

3. Fahrzeugkindersitz nach Anspruch 2, **dadurch gekennzeichnet**, das die Gurtstraffungsmittel zumindest zwei Nocken (7) umfassen, die an gegenüberliegenden Längsseiten des Trägers (2) positioniert sind.

4. Fahrzeugkindersitz nach Anspruch 3, **dadurch gekennzeichnet, dass** die Schwenkachsen (8) der Nocken koaxial sind.

5. Fahrzeugkindersitz nach Anspruch 3 oder 4, **dadurch gekennzeichnet, dass** die Nocken (7) gemeinsam geschwenkt werden können.

6. Fahrzeugkindersitz nach einem der vorangehenden Ansprüche 2-5, **dadurch gekennzeichnet, dass** der Nocken (7) auf der vom Sitz entfernten Seite mit einem Griff (10) versehen ist, der sich von der Schwenkachse zu einer Stelle jenseits der Gurtkontaktfläche erstreckt.

7. Fahrzeugkindersitz nach einem der vorangehenden Ansprüche 2-6, **dadurch gekennzeichnet, dass** der Nocken (7) aus der Ausgangslage, in der die Gurtkontaktfläche (9) sich auf einer ersten Seite einer sich durch die Schwenkachse (8) erstreckenden Senkrechten befindet, in die Spannlage, in der sich die Gurtkontaktfläche auf einer von der ersten Seite entfernten zweiten Seite der Senkrechten befindet, geschwenkt werden kann.

8. Fahrzeugkindersitz nach einem der vorangehenden Ansprüche, **dadurch gekennzeichnet, dass** die Gurtstraffungsmittel in einer im Träger (2) ausgebildeten Ausnehmung untergebracht sind, über die der Gurt sich in der Ausgangslage erstreckt.

9. Fahrzeugkindersitz nach einem der vorangehenden Ansprüche, **dadurch gekennzeichnet, dass** der Träger auf einem Fahrzeugsitz aufgestellt werden kann, wobei die Rückseite des Trägers an der Rückenlehne des Fahrzeugsitzes anliegt, während der Nocken aus einer Ausgangslage, in der die Gurtkontaktfläche von der Rückenlehne hinweg weist, in eine Spannlage, in der die Gurtkontaktfläche zur Rückenlehne hin geschwenkt ist, um eine Schwenkachse geschwenkt werden kann, die sich im Wesentlichen parallel zu dieser Rückseite erstreckt.

10. Fahrzeugkindersitz nach einem der vorangehenden Ansprüche, **dadurch gekennzeichnet, dass** die Gurtführungsmitteln eine im Wesentlichen senkrechte Fläche umfassen welche sich beim Gebrauch im Wesentlichen parallel zur Rückenlehne des Fahrzeugsitzes erstreckt.

11. Fahrzeugkindersitz nach einem der vorangehenden Ansprüche, **dadurch gekennzeichnet, dass** der Träger die Gurtstraffungsmittel mit Verriegelungsmitteln versehen sind, um die Gurtstraffungsmittel relativ zum Träger in der Spannlage zu verriegeln.

12. Fahrzeugkindersitz nach Anspruch 11, **dadurch gekennzeichnet, dass** die Gurtstraffungsmittel mit einer Ausnehmungen versehen sind, die in der Spannlage über einem mit dem Träger verbundenen Vorsprung positioniert werden kann oder umgekehrt.

13. Träger (2), geeignet für einen Fahrzeugkindersitz nach einem der vorangehenden Ansprüche, wobei der Träger (2) mit Gurtführungsmitteln zum Führen eines im Fahrzeug befestigten Gurts für das Fixieren des Fahrzeugkindersitzes in seiner Position im Fahrzeug sowie mit Gurtstraffungsmitteln (7) zum Bewegen des Gurts aus einer Ausgangslage in eine Spannlage, in welcher der Gurt relativ zur Ausgangslage gespannt ist, versehen ist, **dadurch gekennzeichnet, dass** zumindest ein Teil des Gurts durch die Gurtstraffungsmittel (7) in im Wesentlichen vertikaler Richtung vom Träger hinweg aus der Ausgangslage bewegt werden kann.

## Revendications

1. Siège de véhicule pour enfant adapté à une utilisation dans un véhicule, lequel siège de véhicule pour enfant (1) comporte un châssis (2) et un siège (3) relié audit châssis, lequel châssis est pourvu de moyens de guidage de ceinture destinés à guider une ceinture montée dans le véhicule afin de fixer le siège de véhicule pour enfant en position dans le véhicule, ainsi que de moyens de tension de ceinture (7) destinés à déplacer la ceinture depuis une position initiale jusqu'à une position de tension, dans laquelle la ceinture est tendue par rapport à la position initiale, **caractérisé en ce que** au moins une partie de la ceinture peut être déplacée dans une direction sensiblement verticale, à l'écart du châssis, depuis la position initiale grâce aux moyens de tension de ceinture.

2. Siège de véhicule pour enfant selon la revendication 1, **caractérisé en ce que** les moyens de tension de ceinture comportent au moins une came (7) capable d'un mouvement pivotant autour d'un axe de pivot sensiblement horizontal (8), laquelle came est pourvue d'une surface de contact de ceinture (9).

3. Siège de véhicule pour enfant selon la revendication 2, **caractérisé en ce que** les moyens de tension de ceinture comportent au moins deux cames (7) positionnées sur des côtés longitudinaux opposés du châssis (2).

4. Siège de véhicule pour enfant selon la revendication 3, **caractérisé en ce que** les axes de pivot (8) des cames sont coaxiaux.

5. Siège de véhicule pour enfant selon la revendication 3 ou 4, **caractérisé en ce que** les cames (7) peuvent être amenées à pivoter conjointement.

6. Siège de véhicule pour enfant selon l'une quelconque des revendications précédentes 2 à 5, **caractérisé en ce que** la came (7) est pourvue d'une poignée (10) sur un côté éloigné du siège, laquelle poignée s'étend depuis l'axe de pivot jusqu'à une position au-delà de la surface de contact de ceinture.

7. Siège de véhicule pour enfant selon l'une quelconque des revendications précédentes 2 à 6, **caractérisé en ce que** la came (7) peut être amenée à pivoter depuis la position initiale, dans laquelle la surface de contact de ceinture (9) est disposée sur un premier côté d'une verticale s'étendant à travers l'axe de pivot (8), jusqu'à la position de tension, dans laquelle la surface de contact de ceinture est disposée sur un deuxième côté de la verticale éloignée dudit premier côté.

8. Siège de véhicule pour enfant selon l'une quelconque des revendications précédentes, **caractérisé en ce que** les moyens de tension de ceinture sont positionnés dans un renfoncement formé dans le châssis (2), la ceinture s'étendant dans la position initiale au-dessus de ce renfoncement.

9. Siège de véhicule pour enfant selon l'une quelconque des revendications précédentes, **caractérisé en ce que** le châssis peut être positionné sur un siège de véhicule, avec un côté arrière du châssis qui bute contre un support de dossier du siège de véhicule, alors que la came peut être amenée à pivoter autour d'un axe de pivot qui s'étend de manière sensiblement parallèle audit côté arrière, depuis une position initiale, dans laquelle la surface de contact de ceinture est orientée à l'écart du support de dossier, jusqu'à une position de tension, dans laquelle la surface de contact de ceinture est amenée à pivoter vers le support de dossier.

10. Siège de véhicule pour enfant selon l'une quelconque des revendications précédentes, **caractérisé en ce que** les moyens de guidage de ceinture comportent une surface sensiblement verticale qui, lors de l'utilisation, s'étend de manière sensiblement à un support de dossier d'un siège de véhicule.

11. Siège de véhicule pour enfant selon l'une quelconque des revendications précédentes, **caractérisé en ce que** le châssis et les moyens de tension de ceinture sont pourvus de moyens de blocage destinés à bloquer les moyens de tension de ceinture dans la position de tension par rapport au châssis.

12. Siège de véhicule pour enfant selon la revendication 11, **caractérisé en ce que** les moyens de tension de ceinture sont pourvus d'un renfoncement qui peut être positionné au-dessus d'une saillie qui est reliée au châssis, ou vice-versa, dans la position de tension.

13. Châssis (2) prévu pour un siège de véhicule pour enfant selon l'une quelconque des revendications précédentes, lequel châssis (2) est pourvu de moyens de guidage de ceinture destinés à guider une ceinture montée dans le véhicule afin de fixer le siège de véhicule pour enfant en position dans le véhicule, ainsi que de moyens de tension de ceinture (7) destinés à déplacer la ceinture depuis une position initiale jusqu'à une position de tension, dans laquelle la ceinture est tendue par rapport à la position initiale, **caractérisé en ce que** au moins une partie de la ceinture peut être déplacée dans une direction sensiblement verticale, à l'écart du châssis, depuis la position initiale grâce aux moyens de tension de ceinture (7).
